# EUROPÄISCHE PATENTSCHRIFT

(11) **EP 1 779 753 B1**
(45) Veröffentlichungstag und Bekanntmachung des Hinweises auf die Patenterteilung: **12.03.2008**
(21) Anmeldenummer: 05405612.2
(22) Anmeldetag: 28.10.2005
(51) Int. Cl.: A47J 27/09

(54) **Schnellkochtopf**
Pressure cooker
Autocuiseur

(43) Veröffentlichungstag der Anmeldung: 02.05.2007
(73) Patentinhaber: Kuhn Rikon AG, 8486 Rikon im Tösstal (CH)
(72) Erfinder: Auwärter, Wolfgang, 8486 Rikon im Tösstal (CH); Huber, Marc, 8488 Turbenthal (CH)
(74) Vertreter: Groner, Manfred

(56) Entgegenhaltungen:
- EP-A- 0 547 668
- EP-A- 0 614 639
- EP-A- 0 916 298
- DE-A1- 1 917 688

## Beschreibung

Die Erfindung betrifft einen Schnellkochtopf nach dem Oberbegriff des Anspruchs 1.

Schnellkochtöpfe dieser Art sind seit langem bekannt. Durch Erwärmen am Boden des Topfes kann der Druck im Inneren des Schnellkochtopfes erhöht werden, so dass der Garprozess beschleunigt wird. Der Deckel ist in der Regel mit einer BajonettVerbindung mit dem Topf verbunden. Durch eine Schwenkbewegung des Deckels kann dieser vom Topf gelöst werden. Die Verriegelungsvorrichtung verhindert, dass der Deckel bei einem wesentlichen Überdruck gedreht und damit vom Topf gelöst werden kann. Im Stand der Technik sind zahlreiche solche verriegelungsvorrichtungen bekannt geworden. Diese besitzen am Deckel ein Druckelement, welches beispielsweise bei einem Überdruck einen vorstehenden zapfen oder Stift besitzt, der zur Verriegelung mit einem verschiebbaren Riegel zusammenarbeitet.

Die EP-A-916 298 offenbart einen Schnellkochtopf der genannten Art, bei dem die im Beschlage des Deckels gelagerte Wippe einen nach unten ragenden Arm besitzt, der in eine Ausnehmung eines am Topf befestigten Griffes eingreift und an diesem gesteuert ist.

Die EP-A-614 639 offenbart einen Schnellkochtopf mit einem Verriegelungselement, das mit einer im Deckel angeordneten Membran verbindbar und bewegbar ist. Dieses Element verbindet bei einem die Membran beaufschlagendem Rest-Innendruck den Topf mit dem Deckel drehfest miteinander. Das Element greift hierbei in eine Ausnehmung eines am Topf befestigen Griffes ein.

Die EP-A-0 547 668 betrifft einen Schnellkochtopf mit einem im Beschlag des Deckels gelagerten zweiarmigen Hebel, des in einer verriegelnden Position an einem Beschlag des Topfes eingehängt ist.

Die DE-A-1 917 688 offenbart eine Sicherheitseinrichtung für Druckkochtöpfe, die ein als Riegelhebel ausgebildetes Lüftungsorgan aufweist. Ist der Deckel noch nicht in der Schliessstellung, so drückt das Lüftungsorgan auf den Dichtungsring, der damit einen Lüftungsweg freigibt und entsprechend ein Druck im Innern des Drucktopfes nicht aufgebaut werden kann. In der Schliessstellung ist ein Ende des Lüftungsorgan in eine Ausnehmung eines Bajonetts eingerastet. Nach dem Kochvorgang muss zum Verschwenken des Deckels das Lüftungsorgan an einem Hebelende verschwenkt werden, bis eine Entlüftungsnase der Dichtungsring ausreichend zur Bildung eines Luftweges verformt hat. Die Verriegelung ist lösbar und das Entriegeln erfolgt nicht selbsttätig, sondern erfordert ein Verschwenken des Lüftungsorgans und ein Entlüften.

Der Schnellkochtopf nach der EP 0 123 197 A weist in einem Deckelgriff einen Riegelverschluss auf, der als Schnappverschluss ausgebildet ist. Der Riegelverschluss soll verhindern, dass der Deckel gegenüber dem Topf unfreiwillig verdreht wird. Der Deckelgriff ist hier lösbar mit dem Deckel verbunden.

Die DE 27 05 712 A offenbart eine Deckenverriegelungs- und Druckentlastungseinrichtung an einem Dampfdruckkochtopf. Die Verriegelung erfolgt mit einem Nocken, der mit einem an der Oberseite eines Deckelgriffs vorstehenden Betätigungsknopf zur Entriegelung verschiebbar ist. Beim Entriegeln wird gleichzeitig ein Ventil geöffnet und dadurch Druck abgebaut.

Die DE 203 18 647 U betrifft einen Dampf- und Schnellkochtopf. Bei diesem sind zwei Verriegelungen vorgesehen, was eine vergleichsweise aufwendige Herstellung bedingt.

Der Erfindung liegt die Aufgabe zu Grunde, einen Schnellkochtopf der genannten Art zu schaffen, der sich durch eine einfachere und kostengünstigere Verriegelung auszeichnet. Die verriegelung soll trotzdem funktionssicher und einfach in der Handhabung sein.

Die Aufgabe ist bei einem gattungsgemässen Schnellkochtopf gemäss Anspruch 1 gelöst. Eine solche Verriegelung kann mit wenigen Teilen und sehr platzsparend ausgebildet werden. Die Wippe kann beispielsweise in einem Deckelgriff untergebracht werden, wobei der Deckelgriff vergleichsweise schlank ausgebildet werden kann. Die Verriegelung, bzw. die Entriegelung, erfolgt selbsttätig. Es sind somit keine Manipulationen möglich bzw. erforderlich, um die Verriegelung zu lösen.

Nach der Erfindung ist vorgesehen, dass die Wippe bei einer Drehbewegung des Deckels durch eine Kontur des genannten Randes gesteuert wird. Dies hat den wesentlichen Vorteil, dass keine zusätzlichen Teile zur Steuerung der Wippe erforderlich sind.

Nach einer Weiterbildung der Erfindung ist vorgesehen, dass die Kontur durch wenigstens ein Bajonett gebildet wird. Die Kosten sind dann besonders niedrig, wenn gemäss einer Weiterbildung der Erfindung der Rand zur Verriegelung des Deckels eine Ausnehmung, Prägung oder einen vorstehenden Teil aufweist, der mit der Wippe zusammenwirkt. Solche Ausnehmungen und Prägungen können sehr kostengünstig und serienmässig hergestellt werden. Dies gilt insbesondere dann, wenn die Ausnehmung oder Prägung, bzw. der vorstehende Teil, an einem Bajonett angeordnet ist.

Gemäss einer Weiterbildung der Erfindung ist die Wippe in einer im Wesentlichen verdeckten Ausnehmung des Beschlags gelagert. Dies ist insbesondere in ästhetischer Hinsicht vorteilhaft. Die Wippe ist zudem dabei gegen Beschädigung geschützt.

Eine einfache und sichere Lagerung der Wippe ist dann gewährstet, wenn diese gemäss einer Weiterbildung der Erfindung eine Achse aufweist, an der sie im Beschlag begrenzt schwenkbar gelagert ist.

Die Verriegelung ist dann besonders funktionssicher, wenn gemäss einer Weiterbildung der Erfindung die Wippe einen Arm aufweist, der in der verriegelten Position in einem beweglichen Teil des Druckelementes durch einen Anschlag gesperrt wird. Der bewegliche Teil ist beispielsweise ein Zapfen oder ein Stift, der bei einem Überdruck im Schnellkochtopf an der Oberseite des Deckels vorragt.

Nach einer Weiterbildung der Erfindung ist vorgesehen, dass die Wippe einen Finger aufweist, der zur Steuerung der Wippe beim Drehen des Deckels eine Kontur des Topfes abgreift. Dies ermöglicht einen besonders einfachen Aufbau der Verriegelungsvorrichtung. Dies insbesondere dann, wenn gemäss einer Weiterbildung der Erfindung, der Finger in der verriegelten Position mit einem Bajonett in Eingriff ist. Die Erfindung ermöglicht insbesondere eine symmetrische Anordnung, so dass der Deckel beispielsweise in zwei oder drei verschiedenen Positionen mit dem Topf verbunden werden kann. Beispielsweise können zwei oder drei Bajonette symmetrisch angeordnet und für die Verriegelung vorgesehen sein. Ein wesentlicher vorteil der Erfindung wird auch darin gesehen, dass der Schnellkochtopf sich von einem üblichen Schnellkochtopf kaum unterscheidet. Insbesondere kann der Topf so hergestellt werden, dass er sich im Wesentlichen von einem Topf ohne verriegelung kaum unterscheidet.

Eine besonders kostengünstige Herstellung ergibt sich dann, wenn die Wippe einstückig hergestellt ist. Die Wippe kann aber auch aus mehreren miteinander gelenkig verbundenen Teilen hergestellt werden.

Nach einer weiterbildung der Erfindung ist die Wippe so ausgebildet, dass sie bei nicht vollständig geschlossenem Deckel einen im Deckel gelagerten Dichtungsring deformiert, so dass im Kochtopf kein Druck aufgebaut werden kann.

Ausführungsbeispiele der Erfindung werden nachfolgend anhand der Zeichnungen näher erläutert. Es zeigen:
- Fig. 1: eine räumliche Ansicht eines erfindungsgemässen Schnellkochtopfes, wobei der Deckel entfernt ist;
- Fig. 2: eine seitliche Ansicht des erfindungsgemässen Kochtopfes;
- Fig. 3: eine weitere Ansicht des erfindungsgemässen Kochtopfes, wobei auch hier aus zeichnerischen Gründen der Deckel entfernt ist;
- Fig. 4: eine räumliche Ansicht der wippe;
- Fig. 5: eine räumliche Ansicht eines Bajonetts;
- Fig. 6: eine Draufsicht auf einen Topf mit Bajonetten gemäss einer Variante;
- Fig. 7: eine Ansicht eines Deckelgriffs mit einer darin gelagerten Wippe, welche mit gestrichelten Linien gezeichnet ist;
- Fig. 8: eine Draufsicht auf einen erfindungsgemässen Kochtopf, wobei der Deckel in der entriegelten Position gezeigt ist;
- Fig. 9: einen Schnitt durch ein Druckelement;
- Fig. 10a: das Druckelement gemäss Fig. 9, jedoch in Sperrposition;
- Fig. 10b: das Druckelement in überbeanspruchter Stellung, in welcher, bei Überdruck im Kochtopf, Dampf abgelassen wird;
- Fig. 11: schematisch eine Ansicht eines Kochtopfes gemäss einer Variante, wobei Teile aus zeichnerischen Gründen weggelassen sind;
- Fig. 12: eine Draufsicht auf den Kochtopf gemäss Fig. 11;
- Fig. 13: eine weitere Ansicht des Kochtopfes gemäss Fig. 11;
- Fig. 14: eine weitere Ansicht des Kochtopfes gemäss Fig. 11, wobei dieser verriegelt ist;
- Fig. 15: einen Schnitt durch eine Variante des Druckelementes;
- Fig. 16: einen Schnitt durch das Druckelement in der Sperrposition.

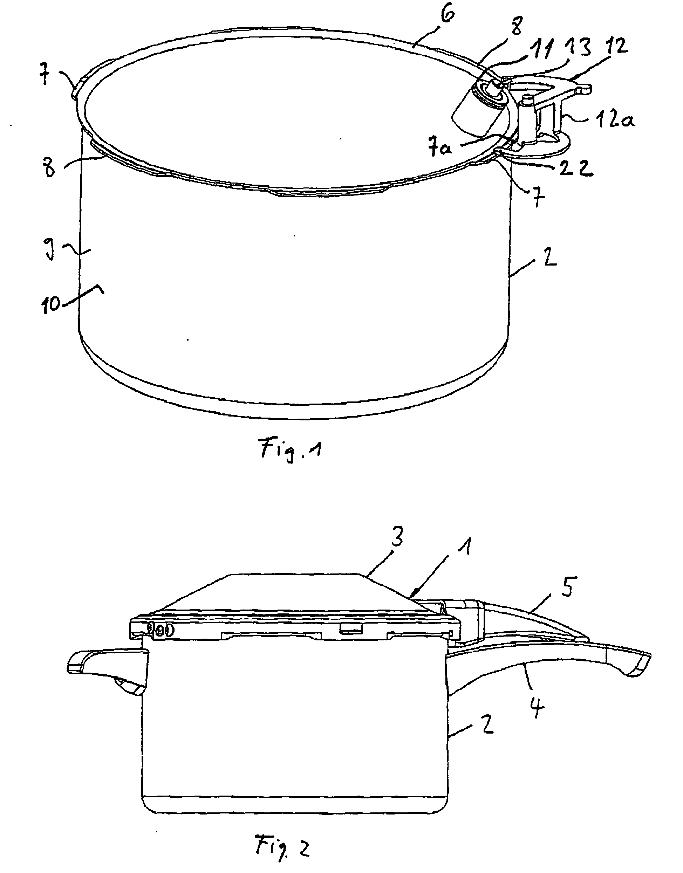

Der in Fig. 2 gezeigte Kochtopf 1 besitzt in an und für sich üblicher Weise einen oben offenen Topf 2, sowie einen Deckel 3, mit welchem der Topf 2 dicht verschliessbar ist. Der Topf 2 ist in bekannter Weise mit Beschlägen versehen, insbesondere mit einem Topfgriff 4, der hier als Stielgriff ausgebildet ist. Der Topfgriff kann aber auch in anderer Weise, wie an und für sich bekannt, ausgebildet sein. Der Deckel 3 besitzt ebenfalls Beschläge, insbesondere einen Deckelgriff 5, der ebenfalls ein Stielgriff ist, und der sich bei geschlossenem Kochtopf 1 über dem Topfgriff 4 befindet.

Der Deckelgriff 5 ist so fest mit dem Deckel 3 verbunden und insbesondere an diesem angeschraubt. Um den Kochtopf 1 zu verschliessen, wird der Deckel 3 auf den Topf 2 aufgesetzt und relativ zum Topf 2 gedreht, bis der Deckelgriff 5 sich über dem Topfgriff 4 befindet.

In der Figur 2 ist der Deckel 3 in der offenen Stellung gezeigt, der Deckelgriff 5 ist somit gegenüber dem Topfgriff 4 gedreht.

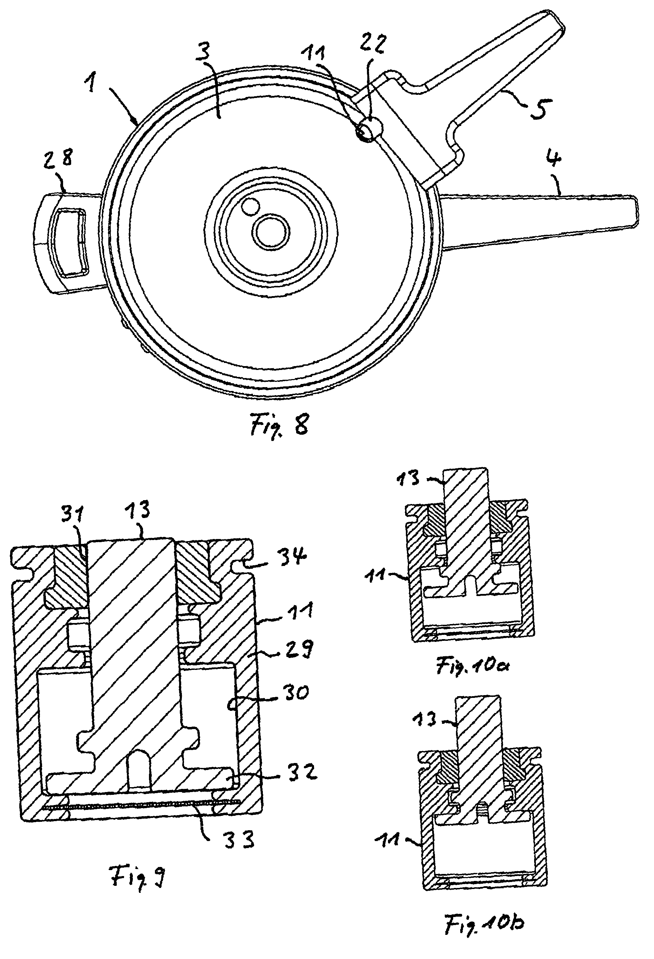

Die Verbindung zwischen dem Topf 2 und dem Deckel 3 ist eine Bajonett-Verbindung, wobei am Topf 2 gemäss Fig. 1 mehrere Bajonette 7 und 8 und korrespondierend am Deckel 3 in bekannter Weise ebenfalls Bajonette angeordnet sind. Die Fig. 8 zeigt den Deckel 3 in der Position, in welcher er vom Topf 2 abnehmbar ist. Der Kochtopf 1 wird geschlossen, indem der Deckel 3 im Uhrzeigersinn gedreht wird, bis sich der Deckelgriff 5 über dem Topfgriff 4 befindet. Zum Öffnen wird der Deckel 3 um den gleichen Winkel im Gegenuhrzeigersinn gedreht.

Am Deckel ist ein Druckelement 11 angeordnet, das einen beweglichen Stift 13 aufweist und das gleichzeitig ein Sicherheitselement ist, das bei einem vorbestimmten Überdruck in der in Fig. 10b gezeigten Stellung Dampf ablässt. Dieser Stift 13 ist gemäss den Figuren 9 und 10 verschiebbar in einer Bohrung 31 eines Führungselementes 10b sowie einer Ausnehmung 30 gelagert. Das Druckelement 11 besitzt ein hülsenförmiges und gummielastisches Gehäuse 29 mit einer Nut 34, in die ein Rand einer Bohrung des Deckels eingreift, so dass das Druckelement 11 sicher am Deckel 3 fixiert ist. Mit einem Sieb 33 ist die Ausnehmung 30 gegenüber dem Innern des Kochtopfes 1 gegen Verschmutzung geschützt. Die Membran 33 ist flexibel. Herrscht im Innern des Kochtopfes 1 kein Überdruck, so befindet sich der Stift 13 in der in Fig. 9 gezeigten Position. Steigt der Druck im Innern des Kochtopfes 1 an, so wird der Stift 13 angehoben und überragt schliesslich mit seinem vorderen Ende das Gehäuse 29, wie dies in Fig. 10a gezeigt ist. Nimmt der Druck im Innern des Kochtopfes 1 noch weiter zu, so bewegt er sich schliesslich in die in Figur 10b gezeigte Position, in welcher Druck abgebaut wird.

Das Druckelement 11 bildet damit gleichzeitig ein Sicherheitsventil, das verhindert, dass im Kochtopf 1 ein nicht zulässiger Druck entsteht.

Das Druckelement 11 wirkt mit einer Verriegelungsvorrichtung 12 zusammen. Diese Verriegelungsvorrichtung 12 und das Druckelement 11 sollen verhindern, dass der Deckel 3 bei einem im Innern des Kochtopfes 1 herrschenden Überdruck geöffnet werden kann. Somit soll verhindert werden, dass der Deckel 3 bei einem Überdruck nicht gedreht werden kann.

Das Öffnen soll auch bei einem vergleichsweise kleinen Überdruck von beispielsweise ab 0.04 oder 0.05 bar sicher verhindert werden. Die Verriegelung soll selbsttätig erfolgen, so dass sichergestellt ist, dass bei geschlossenem Kochtopf 1 und bei herrschendem Überdruck ein Öffnen ausgeschlossen ist.

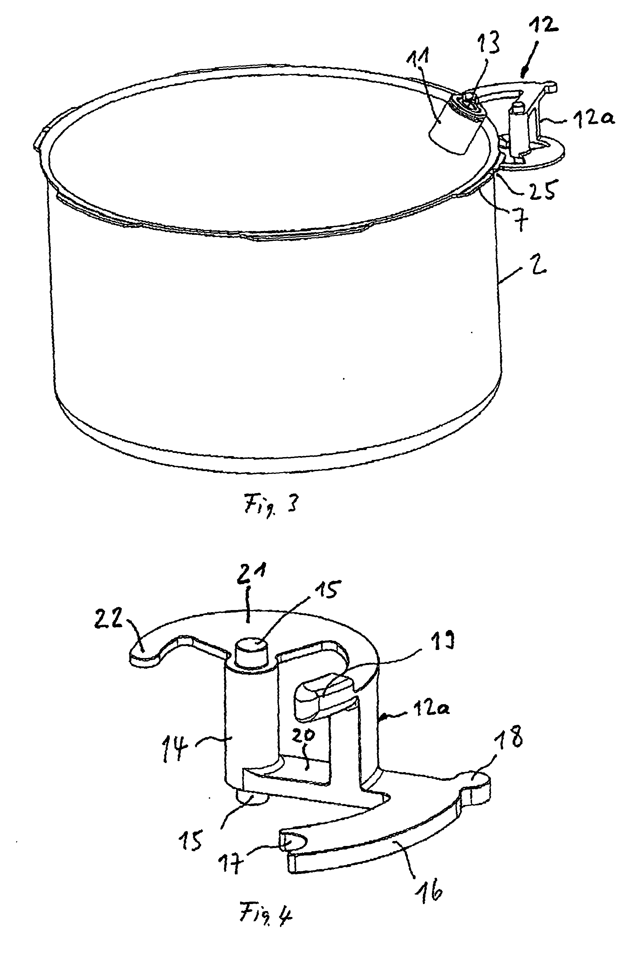

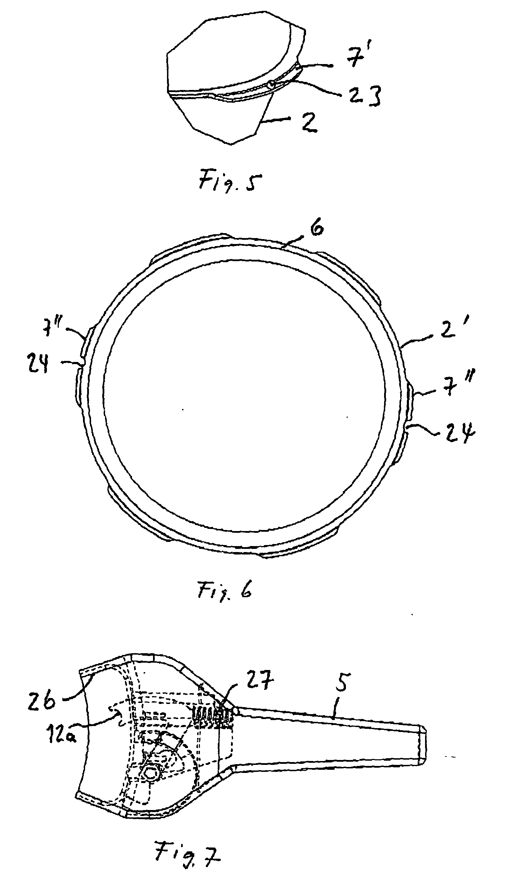

Die verriegelungsvorrichtung 12 besitzt eine Wippe 12a, die vorzugsweise aber nicht zwingend, einstückig und aus Kunststoff hergestellt ist. Die Wippe 12a ist gemäss Fig. 7 in einer Ausnehmung 26 des Deckelgriffs 5 schwenkbar gelagert. Zur Lagerung besitzt die Wippe 12a gemäss Fig. 4 eine Achse 14 mit zwei Achszapfen 15, die in hier nicht gezeigte entsprechende Öffnungen im Innern der Ausnehmung 26 des Deckelgriffs 5 eingreifen. Im Abstand zur Achse 14 befindet sich in der Ausnehmung 26 ein Federelement 27, und insbesondere eine Spiralfeder, die an einem Nocken 18 mit der wippe 12a verbunden ist. Das Federelement 27 kann auch an einer anderen Stelle der wippe 12a angreifen und beispielsweise auch als Blattfeder ausgebildet sein.

Der Nocken 18 befindet sich an einem Arm 16, der radial von der Achse 14 absteht und der im Abstand zum Nocken 18 eine Ausnehmung 17 besitzt, die in der verriegelten Position gemäss Fig. 1 mit dem Stift 13 zusammenarbeitet. Der Arm 16 ist über einen Steg 20 fest mit der Achse 14 verbunden. Die wippe 12a kann aus Kunststoff oder einem geeigneten Metall hergestellt sein.

Parallel zum Arm 16 erstreckt sich eine Wandung 21, an welcher ein Finger 22 angeformt ist. Dieser Finger 22 arbeitet mit einem Rand 6 des Topfes 2 und insbesondere mit einem Bajonett 7 zusammen. Im Abstand zum Finger 22 ist ein Nocken 19 angeordnet, der wie ersichtlich gegenüber der Wandung 21 etwas verdickt ist. Die Wandung 21 ist mit dem Nocken 19 in der Ausnehmung 26 begrenzt schwenkbar gelagert. Der Nocken 19 dient zur Steuerung der Wippe 12a und ist so positioniert, dass er bei einem Drehen des Deckels 3 am Rand 6 entlang gleitet. Solange der Deckel 3 nicht ganz in der geschlossenen Stellung ist, wirkt der Nocken 19 auf einen hier nicht gezeigten, an sich üblichen im Deckel 3 gelagerten Dichtungsring und deformiert diesen, so dass im Kochtopf kein Druck aufgebaut werden kann. Damit wird eine weitere Sicherheitsfunktion gewährleistet.

Bezüglich des in Fig. 3 gezeigten Bajonetts 7 ist der Nocken 19 so angeordnet, dass er bei einer Stellung des Deckels 3 gemäss Fig. 8 sich vor einem Bajonett 7 befindet, wie dies in Fig. 3 gezeigt ist. Wird der Deckel 3 von der in Fig. 8 gezeigten Stellung im Uhrzeigersinn gedreht, so fährt der Nocken 19 auf das Bajonett 7 auf und gleitet an diesem entlang. Der Nocken 19 wird durch das Bajonett 7 in radialer Richtung ausgelenkt und entsprechend wird die Wippe 12a um die Achse 14 gedreht. Durch diese Drehbewegung wird gleichzeitig der Finger 22 verschwenkt und zwar so, dass er radial nach innen bewegt wird. Der Nocken 19 bewegt sich somit nach Aussen und der Finger 22 nach Innen. Ist der Deckel 3 in der geschlossenen Stellung, so liegt der Nocken 19 an der Aussenseite an der Aussenseite des Bajonetts 7 an und der Finger 22 greift gemäss Fig. 1 in den Bereich des Bajonetts 7 ein. Befindet sich im Kochtopf 1 kein Überdruck, so kann der Deckel 3 wieder in die in Fig. 8 gezeigte Stellung gedreht, und damit der Kochtopf 1 wieder geöffnet werden. Die Wippe 12a macht hierbei eine entsprechende Gegenbewegung um die Achse 14. Diese Bewegung wird von der gespannten Feder 27 unterstützt. Befindet sich nun im Innern des Kochtopfes 1 ein Überdruck, so ist diese Gegenbewegung nicht mehr möglich. Bei Überdruck ragt der Stift 13 gemäss Fig. 1 an der Deckeloberseite vor, und zwar derart, dass er sich unmittelbar vor der Ausnehmung 17 befindet, wie dies in Fig. 1 gezeigt ist. Die wippe 12a kann dadurch nicht mehr verschwenkt werden, da der Arm 16 an der Ausnehmung 17 am vorragenden Stift 13 ansteht.

Wie oben erwähnt, greift in der genannten Stellung gemäss Fig. 1 der Finger 22 in den Bereich des Bajonetts 7 ein. Das Bajonett 7 ist gemäss Fig. 1 mit einer Prägung 7a versehen, die das Bajonett 7 so verformt, dass es im Bereich der Prägung erhöht ist. Diese Prägung 7a bildet einen Anschlag für den Finger 22, und verhindert, dass der Deckel 3 geöffnet werden kann.

Anstelle der Prägung 7a kann auch beispielsweise gemäss Fig. 5 an einem Bajonett 7' ein nach oben ragender Stift 23 oder Nocken oder dergleichen angeordnet sein. Wird versucht, den Deckel 3 zu öffnen, so steht der Finger 22 entsprechend am Stift 23 an. Alternativ kann auch gemäss Fig. 6 ein Deckel 2', ein Bajonett 7" aufweisen, welches eine Ausnehmung 24 besitzt. In der verriegelten Position greift dann der Finger 22 in diese Ausnehmung 24 ein und dadurch kann der Deckel 3 nicht mehr geöffnet werden. Wie die Fig. 6 zeigt, sind vorzugsweise wenigstens zwei gegenüberliegende Bajonette 7" mit einer solchen Ausnehmung 24 versehen. Der Deckel 3 kann entsprechend in zwei Positionen auf den Topf 2' aufgesetzt werden. Grundsätzlich sind auch mehr als zwei symmetrisch angeordnete Bajonette 7'' möglich. Der Deckel 3 kann dann beispielsweise wahlweise in drei Positionen aufgesetzt werden. Die Verriegelung erfolgt in allen drei Positionen, wie oben erläutert. Dies gilt selbstverständlich auch für die Bajonette 7 und 7' .

Ist nach Beendigung eines Kochvorgangs der Kochtopf 1 abgekühlt und der Überdruck weitgehend abgebaut, beispielsweise unter 0.04 oder 0.05 bar, so befindet sich der Stift 13 wieder in der in Fig. 9 gezeigten Position. Der Deckel 3 kann nun ohne weiteres in die in Fig. 8 gezeigte Stellung gedreht werden. Die wippe 12a kann hierbei verschwenkt werden, da der Stift 13 die Schwenkung der Wippe 12a um die Achse 14 nicht mehr verhindert. Durch die Schwenkbewegung der Wippe 12a wird der Finger 22 radial nach aussen bewegt und kommt damit ausserhalb des Eingriffs zur Prägung 7a, bzw. zum Stift 23 oder bewegt sich aus der Ausnehmung 24 heraus. Da sich im Innern des Kochtopfes 1 kein Überdruck befindet, ist diese Bewegung, bzw. das Öffnen des Kochtopfes 1 gefahrlos.

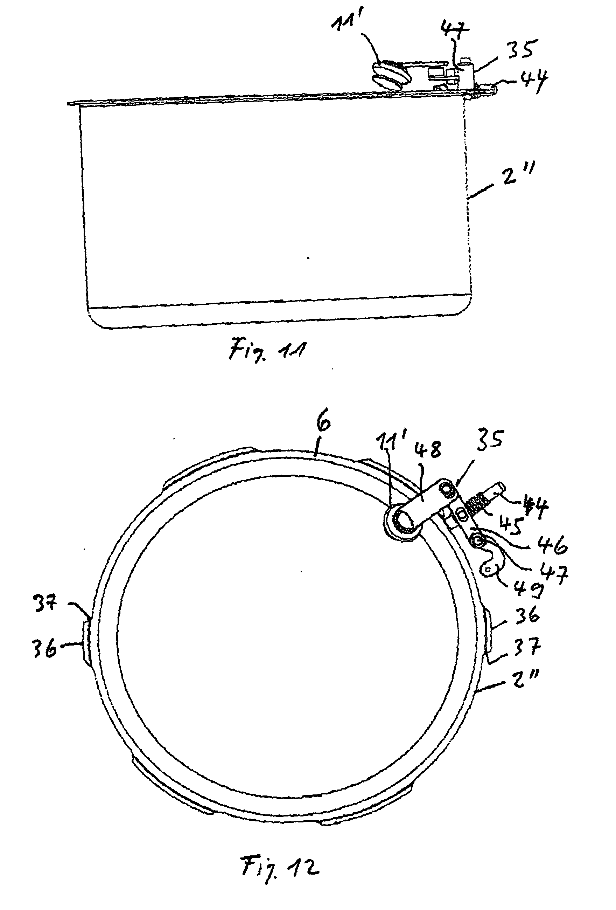

Die Figuren 11 bis 16 zeigen eine Verriegelungsvorrichtung 35, die ebenfalls in einer entsprechenden Ausnehmung des Topfgriffs 4 gelagert ist. Die Verriegelungsvorrichtung 35 besitzt eine Achse 47, mit der sie verschwenkbar in der Ausnehmung gelagert ist. Diese Achse 47 ist beispielsweise gemäss Fig. 12 mit einem Finger 49 und über einen Hebel 46 schwenkbar mit einem Arm 48 verbunden. Der Hebel 46 ist mit einem Stift 44 in Eingriff, der gemäss Fig. 12 mit einem vorderen Ende aufgrund der Spannung eines Federelementes 45 am Rand 6 anliegt. Der Stift 44 ist mit dem Hebel 46 schwenkbar verbunden. Der Finger 49 entspricht in seiner Funktion dem Finger 22 und der Hebel 48 entspricht in seiner Funktion dem Arm 16. Der Stift 44 ist im Topfgriff 44 verschiebbar gelagert, wobei die Feder 45 am Topfgriff 4 abgestützt ist.

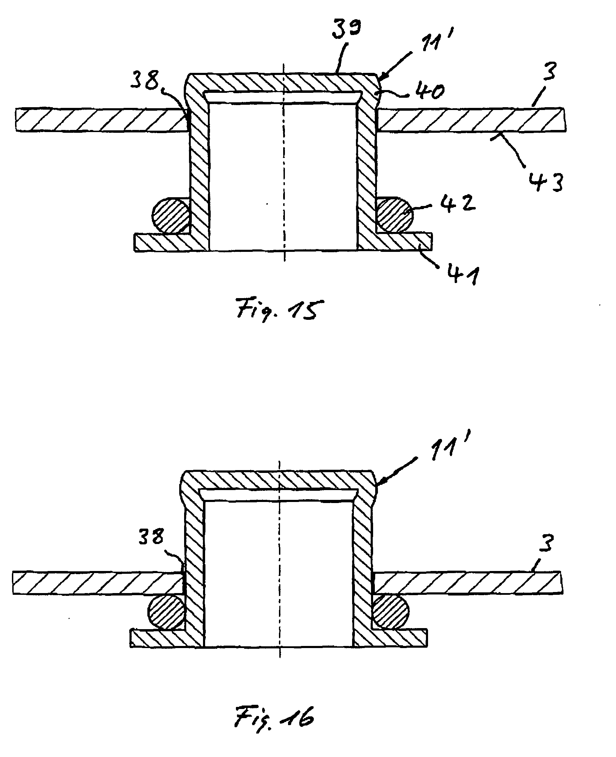

Die Verriegelungsvorrichtung 35 arbeitet mit einem Druckelement 11' zusammen, das gemäss den Figuren 15 und 16 ausgebildet ist und das im Unterschied zum Druckelement 11 keine Sicherheitsfunktion ausübt. Wie aus diesen Figuren ersichtlich, weist das Druckelement 11' einen hülsenförmigen Körper 39 auf, der unverlierbar und verschiebbar in einer Öffnung 38 des Deckels 3 gelagert ist. Zwischen der Innenseite 43 des Deckels 3 und einem Kragen 41 ist ein Dichtungsring 42 angeordnet. Eine Verdickung 40 befindet sich im Abstand zum Kragen 41 und fixiert das Druckelement 11' im Deckel 3. Bei einem Überdruck im Kochtopf 1 bewegt sich das Druckelement 11' in die in Fig. 16 gezeigte Position, in welcher wie ersichtlich das Druckelement 11' an der Oberseite des Deckels 3 vorragt. Das bei dieser Ausführung vorgesehene Druckelement 11' kann aber auch durch das in den Figuren 9 und 10 gezeigte Druckelement 11 ersetzt sein.

Die Figuren 11 und 12 zeigen die Verriegelungsvorrichtung 35 in nicht verriegeltem Zustand, in dem der Deckel 3 somit gedreht werden kann. Das Druckelement 11' befindet sich in der in Fig. 15 gezeigten Position.

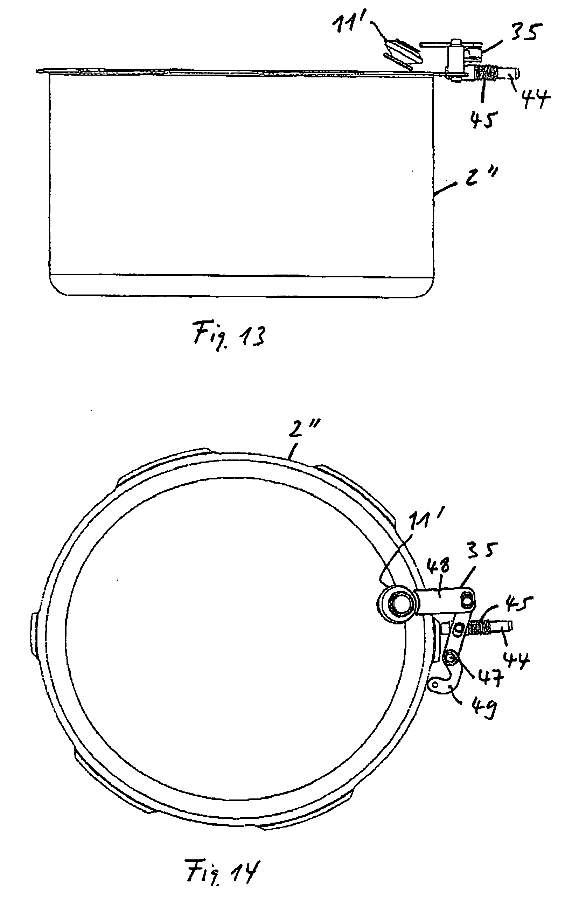

Die Figuren 13 und 14 zeigen den verriegelten Zustand. Der Deckel 3 befindet sich in der geschlossenen stellung und das Druckelement 11' in der in Fig. 16 gezeigten Position, in welcher somit der Körper 39 nach oben vorsteht. Der Stift 44 ist gegen die Feder 45 gespannt und liegt an einem Bajonett 36 an. Das Bajonett 36 drückt den Stift 44 in eine Position, in welcher er radial weiter aussen angeordnet ist als in der in Fig. 12 gezeigten entriegelten Position. Aufgrund der Stellung des Hebels 46 befindet sich der Finger 49 radial weiter Innen in der in Fig. 14 gezeigten Position. Wird nun versucht, den Deckel 3 zu öffnen, so gelangt der Arm 48 in Eingriff mit dem vorstehenden Druckelement 11'. Der Finger 49 kann dadurch nicht in die in Fig. 12 gezeigte Stellung gedreht werden. Er verbleibt im Wesentlichen in der in Fig. 14 gezeigten Stellung und steht schliesslich an einer Schulter 37 des Bajonette 36 an. Der Deckel 3 kann dadurch nicht weiter gedreht werden und somit auch nicht geöffnet werden.

Das Bajonett 36 ist hier wie ersichtlich gekürzt. Denkbar ist aber auch eine Ausführung, bei welcher der Finger 49 an einer Schulter eines nicht gekürzten Bajonetts ansteht. Bei dieser Ausführung kann somit ein bisher üblicher Topf verwendet werden.

### Bezugszeichenliste

- 1: Kochtopf
- 2: Topf
- 3: Deckel
- 4: Topfgriff
- 5: Deckelgriff
- 6: Rand
- 7: Bajonett
- 8: Bajonett
- 9: Wandung
- 10: Aussenseite
- 11: Druckelement
- 12: Verriegelungsvorrichtung
- 12a: Wippe
- 13: Stift
- 14: Achse
- 15: Achszapfen
- 16: Arm
- 17: Ausnehmung
- 18: Nocken
- 19: Nocken
- 20: Steg
- 21: Wandung
- 22: Finger
- 23: Stift
- 24: Ausnehmung
- 25: Prägung
- 26: Ausnehmung
- 27: Federelement
- 28: Griff
- 29: Gehäuse
- 30: Ausnehmung
- 31: Bohrung
- 32: Kragen
- 33: Sieb
- 34: Nut
- 35: Verriegelungsvorrichtung
- 36: Bajonett
- 37: Schulter
- 38: Öffnung
- 39: Körper
- 40: Verdickung
- 41: Kragen
- 42: Dichtungsring
- 43: Innenseite
- 44: Stift
- 45: Federelement
- 46: Hebel
- 47: Achse
- 48: Arm
- 49: Finger

## Patentansprüche

1. Schnellkochtopf, der einen Topf (2) mit einem Boden und einer Seitenwandung sowie einem oberen Rand (6) aufweist, mit einem Deckel (3), der dicht am genannten oberen Rand (6) mit dem Topf (2) verbindbar ist und mit einer Verriegelungsvorrichtung (12), welche bei einem vorbestimmten Überdruck den Deckel (3) in Zusammenarbeit mit einem am Deckel (3) angeordneten Druckelement (11) unlösbar mit dem Topf (2) verbindet, welche Verriegelungsvorrichtung (12) in einem Beschlag (5) des Deckels (3) eine beweglich gelagerte Wippe (12a) aufweist, die zu Ihrer Steuerung und zur Verriegelung des Deckels (3) mit dem genannten Druckelement (11) zusammenwirkt, **dadurch gekennzeichnet, dass** die Wippe (12) bei einer Drehbewegung des Deckels (3) durch eine Kontur des oberen Randes (16) des Topfs (2) gesteuert wird.

2. Schnellkochtopf nach Anspruch 1, **dadurch gekennzeichnet, dass** die Kontur durch wenigstens ein Bajonett (7, 8, 36) gebildet wird.

3. Schnellkochtopf nach Anspruch 1 oder 2, **dadurch gekennzeichnet, dass** der Rand (16) zur Verriegelung des Deckels (3) eine Ausnehmung (24), Prägung (25) oder einen vorstehenden Teil aufweist, die bzw. der mit der Wippe (12) zusammenwirkt.

4. Schnellkochtopf nach Anspruch 3, **dadurch gekennzeichnet, dass** die Ausnehmung (24), die Prägung (25) oder der vorstehende Teil an einem Bajonett (7, 8, 36) angeordnet ist.

5. Schnellkochtopf nach einem der Ansprüche 1 bis 4, **dadurch gekennzeichnet, dass** die Wippe (12a) in einer im Wesentlichen verdeckten Ausnehmung (26) des Beschlags (5) gelagert ist.

6. Schnellkochtopf nach einem der Ansprüche 1 bis 5, **dadurch gekennzeichnet, dass** die Wippe (12a) eine Achse (16) aufweist, an der sie am Beschlag (5) begrenzt schwenkbar gelagert ist.

7. Schnellkochtopf nach einem der Ansprüche 1 bis 6, **dadurch gekennzeichnet, dass** die Wippe (12a) einen Arm (16) aufweist, der in der verriegelten Position von einem beweglichen Teil (13) des Druckelementes (11) durch einen Anschlag gesperrt wird.

8. Schnellkochtopf nach einem der Ansprüche 1 bis 7, **dadurch gekennzeichnet, dass** die Wippe (12a) einen Finger (49) aufweist, der zur Steuerung der Wippe (12a) beim Drehen des Deckels (3) eine Kontur des Topfes (2) abgreift.

9. Schnellkochtopf nach Anspruch 8, **dadurch gekennzeichnet, dass** der Finger (49) in der verriegelten Position mit einem Bajonett (7, 8, 36) in Eingriff ist.

10. Schnellkochtopf nach Anspruch 9, **dadurch gekennzeichnet, dass** das Bajonett (7, 8, 36) eine Ausnehmung (24), eine Prägung (25) oder einen vorstehenden Teil aufweist, mit dem der Finger (49) in der verriegelten Position in Eingriff ist.

11. Schnellkochtopf nach einem der Ansprüche 1 bis 10, **dadurch gekennzeichnet, dass** die Wippe (12a) einstückig ist.

12. Schnellkochtopf nach einem der Ansprüche 1 bis 11, **dadurch gekennzeichnet, dass** der Rand (6) des Topfes (2) zwei oder mehr als zwei symmetrisch angeordnete Bajonette (7, 8 36) aufweist, die mit der Verriegelungsvorrichtung (12) zusammenarbeiten können.

13. Schnellkochtopf nach einem der Ansprüche 1 bis 12, **dadurch gekennzeichnet, dass** im Innern des Deckels (3) ein Dichtungsring (42) gelagert ist und dass die Wippe (12a) diesen Ring (42) deformiert, solange der Deckel (3) nicht in der geschlossenen Stellung ist und im Innern des Kochtopfes (1) kein Druck aufgebaut werden kann.

## Claims

1. A pressure cooker which has a pot (2) with a base and a side wall and an upper rim (6), having a lid (3) which can be connected to the pot (2) in a sealed manner along the abovementioned upper rim (6) and having a locking device (12) which, in the presence of a predetermined positive pressure, connects the lid (3) to the pot (2) in a non-releasable manner in conjunction with a pressure element (11) arranged on the lid (3), wherein the locking device (12), in a fitting (5) of the lid (3), has a rocker (12a) which is mounted in a movable manner and, for control purposes and in order to lock the lid (3), interacts with the abovementioned pressure element (11), **characterized in that** when the lid (3) is rotated, the rocker (12) is controlled by a contour of the abovementioned rim of the pot (2).

2. The pressure cooker as claimed in claim 1, wherein the contour is formed by at least one bayonet (7, 8, 36).

3. The pressure cooker as claimed in claim 1 or 2, wherein, for the purpose of locking the lid (3), the rim (6) has a recess (24), stamped formation (25) or a projecting part which interacts with the rocker (12a).

4. The pressure cooker as claimed in claim 3, wherein the recess (24), the stamped formation (25) or the projecting part is arranged on a bayonet (7, 8, 36).

5. The pressure cooker as claimed in one of claims 1 to 4, wherein the rocker (12a) is mounted in an essentially concealed recess (26) of the fitting (5).

6. The pressure cooker as claimed in one of claims 1 to 5, wherein the rocker (12a) has a spindle (15) by which it is mounted on the fitting (5) such that it can be pivoted to a limited extent.

7. The pressure cooker as claimed in one of claims 1 to 6, wherein the rocker (12a) has an arm (16) which, in the locked position, is stop-blocked by a movable part (13) of the pressure element (11).

8. The pressure cooker as claimed in one of claims 1 to 7, wherein the rocker (12a) has a finger (49) which, for the purpose of controlling the rocker (12a) when the lid (3) is rotated, follows along a contour of the pot (2).

9. The pressure cooker as claimed in claim 8, wherein, in the locked position, the finger (49) engages with a bayonet (7, 8, 36).

10. The pressure cooker as claimed in claim 9, wherein the bayonet (7, 8, 36) has a recess (24), a stamped (25) formation or a projecting part with which the finger (49), in the locked position, engages.

11. The pressure cooker as claimed in one of claims 1 to 10, wherein the rocker (12A) is in one piece.

12. The pressure cooker as claimed in one of claims 1 to 11, wherein the rim (6) of the pot (2) has two or more than two symmetrically arranged bayonets (7, 8, 36) which can interact with the locking device (12).

13. The pressure cooker as claimed in one of claims 1 to 12, wherein a sealing ring (42) is mounted in the interior of the lid (3) and the rocker (12a) deforms this ring (42) if the lid (3) is not in the closed position and it is not possible for any pressure to build up in the interior of the pressure cooker (1).

## Revendications

1. Autocuiseur, présentant un pot (2) avec un fond et une paroi latérale ainsi qu'un bord supérieur (6), avec un couvercle (3), qui peut être connecté hermétiquement contre ledit bord supérieur (6) avec le pot (2), et avec un dispositif de verrouillage (12) qui, en cas de surpression prédéterminée, relie le couvercle (3) coopérant avec un élément de pression (11) disposé sur le couvercle (3) de manière non desserrable avec le pot (2), ce dispositif de verrouillage (12) présentant une bascule (12a) montée mobile dans une ferrure (5) du couvercle (3), la bascule coopérant avec ledit élément de pression (11) pour sa commande et pour le verrouillage du couvercle (3), **caractérisé en ce que** la bascule (12), en cas de mouvement de rotation du couvercle (3) est commandée par un contour du bord supérieur (16) du pot (2).

2. Autocuiseur selon la revendication 1, **caractérisé en ce que** le contour est formé par au moins une baïonnette (7, 8, 36).

3. Autocuiseur selon la revendication 1 ou 2, **caractérisé en ce que** le bord (16) pour le verrouillage du couvercle (3) présente un évidement (24), une empreinte (25) ou une partie saillante qui coopère avec la bascule (12).

4. Autocuiseur selon la revendication 3, **caractérisé en ce que** l'évidement (24), l'empreinte (25) ou la partie saillante est disposé(e) sur une baïonnette (7, 8, 36).

5. Autocuiseur selon l'une quelconque des revendications 1 à 4, **caractérisé en ce que** la bascule (12a) est montée dans un évidement (26) essentiellement couvert de la ferrure (5).

6. Autocuiseur selon l'une quelconque des revendications 1 à 5, **caractérisé en ce que** la bascule (12a) présente un axe (16) sur lequel elle est montée de manière à pouvoir pivoter de façon limitée sur la ferrure (5).

7. Autocuiseur selon l'une quelconque des revendications 1 à 6, **caractérisé en ce que** la bascule (12a) présente un bras (16) qui est bloqué par une butée dans la position verrouillée par une partie mobile (13) de l'élément de pression (11).

8. Autocuiseur selon l'une quelconque des revendications 1 à 7, **caractérisé en ce que** la bascule (12a) présente un doigt (49) qui saisit un contour du pot (2) pour la commande de la bascule (12a) lors de la rotation du couvercle (3).

9. Autocuiseur selon la revendication 8, **caractérisé en ce que** le doigt (49) est en prise dans la position verrouillée avec une baïonnette (7, 8, 36).

10. Autocuiseur selon la revendication 9, **caractérisé en ce que** la baïonnette (7, 8, 36) présente un évidement (24), une empreinte (25) ou une partie saillante avec laquelle le doigt (49) est en prise dans la position verrouillée.

11. Autocuiseur selon l'une quelconque des revendications 1 à 10, **caractérisé en ce que** la bascule (12a) est réalisée d'une seule pièce.

12. Autocuiseur selon l'une quelconque des revendications 1 à 11, **caractérisé en ce que** le bord (6) du pot (2) présente deux baïonnettes (7, 8, 36) ou plus, disposées symétriquement, qui peuvent coopérer avec le dispositif de verrouillage (12).

13. Autocuiseur selon l'une quelconque des revendications 1 à 12, **caractérisé en ce qu'**une bague d'étanchéité (42) est montée à l'intérieur du couvercle (3), et **en ce que** la bascule (12a) déforme cette bague (42), tant que le couvercle (3) n'est pas dans la position fermée et qu'aucune pression ne peut s'accumuler à l'intérieur de l'autocuiseur (1).
